# EUROPÄISCHE PATENTANMELDUNG

(11) **EP 2 527 825 A2**
(43) Veröffentlichungstag der Anmeldung: **28.11.2012**
(21) Anmeldenummer: 12003987.0
(22) Anmeldetag: 22.05.2012
(51) Int. Cl.: G01N 29/024, G01N 29/22, G01N 29/30

(54) **Vorrichtung und Verfahren zur quantitativen Erfassung wenigstens einer physikalischen Eigenschaft eines flüssigen oder gasförmigen Probenmediums mittels Ultraschall**

(30) Priorität: 27.05.2011 DE 102011102641
(71) Anmelder: Fraunhofer-Gesellschaft zur Förderung der angewandten Forschung e.V., 80686 München (DE)
(72) Erfinder: Licht, Rudolf, 66440 Blieskastel (DE); Gebhardt, Wolfgang,, 66583 Spiesen-Elversberg (DE)
(74) Vertreter: Rösler, Uwe

(57) **Zusammenfassung**

Beschrieben wird eine Vorrichtung sowie ein Verfahren zur quantitativen Erfassung wenigstens einer physikalischen Eigenschaft eines flüssigen oder gasförmigen Probenmediums mit einer Messzelle, die zwei Messkammern vorsieht, von denen eine erste Messkammer mit dem Probenmedium und eine zweite Messkammer, die so genannte Referenzkammer, mit einem Referenzmedium befüllbar sind und an die zur Einschallung von Schallwellen wenigstens ein erster Schallwandler und zur Detektion von Schallwellen wenigstens ein zweiter Schallwandler akustisch gekoppelt sind, sowie mit einer Ansteuer- und Auswerteinheit, die mit dem wenigstens ersten und zweiten Schallwandler verbunden sind.

Die Erfindung zeichnet sich dadurch aus, dass die zwei Messkammern über eine gemeinsame Trennwand unmittelbar aneinandergrenzen, dass die Trennwand aus dem ersten Schallwandler besteht oder der erste Schallwandler Teil der Trennwand ist, dass beide Messkammern jeweils eine der gemeinsamen Trennwand gegenüberliegende und parallel zur Trennwand orientierte Seitenwand besitzen, die jeweils aus dem zweiten Schallwandler zur Detektion von Schallwellen besteht oder in der jeweils der zweite Schallwandler zur Detektion integriert ist, wobei der Abstand zwischen einer dem ersten Schallwandler zuordenbaren Schallwandleroberfläche und einer dem zweiten Schallwandler zuordenbaren Schallwandleroberfläche, die der Schallwandleroberfläche des ersten Schallwandlers zugewandt ist, in beiden Messkammern identisch ist, und dass die jeweils zweiten Schallwandler Empfangssignale generieren, die zur Ansteuer- und Auswerteinheit übertragbar sind und der Erfassung der wenigstens einen physikalischen Eigenschaft zugrunde liegen.

## Beschreibung

### Technisches Gebiet

Die Erfindung bezieht sich auf eine Vorrichtung sowie auf ein Verfahren zur quantitativen Erfassung wenigstens einer physikalischen Eigenschaft eines flüssigen oder gasförmigen Probenmediums mit einer Messzelle, die zwei Messkammern vorsieht, von denen eine erste Messkammer mit dem Probenmedium und eine zweite Messkammer, die so genannte Referenzkammer, mit einem Referenzmedium befüllbar sind und an die zur Einschallung von Schallwellen wenigstens ein erster Schallwandler und zur Detektion von Schallwellen wenigstens ein zweiter Schallwandler akustisch gekoppelt sind, sowie mit einer Ansteuer- und Auswerteinheit, die mit dem wenigstens ersten und zweiten Schallwandler verbunden sind.

### Stand der Technik

Seit vielen Jahren werden Ultraschall-Methoden zur Bestimmung der Dichte von Flüssigkeiten eingesetzt. Diesen Verfahren ist gemeinsam, dass zum einen die akustische Impedanz der Flüssigkeit und zum anderen die Schallgeschwindigkeit der Flüssigkeit ermittelt werden. Die Dichte ergibt sich aus dem Quotienten von akustischer Impedanz und Schallgeschwindigkeit.

Die Bestimmung der akustischen Impedanz erfolgt durch Messung von Reflexionskoeffizienten an fest-flüssig und fest-fest-Grenzflächen. Während die Schallgeschwindigkeitsmessung mit sehr hoher Präzision durchgeführt werden kann, ist die Bestimmung der Reflexionskoeffizienten aufgrund von Schwächungseffekten und Schalldivergenzen deutlich ungenauer. Diese Ungenauigkeit pflanzt sich natürlich in der Genauigkeit der Impedanzbestimmung und weiter der Dichtebestimmung fort.

In vielen Anwendungsfällen ist jedoch eine höhere Präzision in der Dichtebestimmung von Flüssigkeiten erwünscht, wie beispielsweise bei einer hochgenauen Dichtemessung an wässrigen Lösungen.

Aus der DE 195 35 848 C1 ist eine Vorrichtung zur Messung der akustischen Impedanz von Flüssigkeiten zu entnehmen, deren Messergebnisse über eine gute Langzeit- und Temperaturstabilität verfügen sollen. Die bekannte Messzelle verfügt über einen plattenförmigen, piezoelektrischen Schallwandler, an dessen beiden sich gegenüberliegenden Schallwandleroberflächen als Vorlaufstrecken bezeichnete Durchschallungskörper, vorzugsweise aus Kunststoff oder Stahl, anschließen, die jeweils über unterschiedlich dimensionierte Dicken bzw. Vorlaufstreckenlängen verfügen. Die zu messende Flüssigkeit schließt einseitig an einer ersten Vorlaufstrecke an und bildet eine erste fest-flüssig-Grenzfläche. An der gegenüberliegenden, zweiten Vorlaufstrecke schließt ein Referenzmedium mit bekannten akustischen Eigenschaften an, bspw. ein Gas. Sowohl das Referenzmedium als auch die zu untersuchende Flüssigkeit ist von einer Messkammerwand umschlossen. Zur Messung der akustischen Impedanz des flüssigen Mediums wird vom Schallwandler ein in die erste und zweite Vorlaufstrecke bidirektional gerichteter Schallimpuls abgegeben, der beidseitig an den Grenzflächen zwischen den Vorlaufstrecken und der zu messenden Flüssigkeit sowie des Referenzmediums reflektiert wird. In zeitlicher Trennung wird entsprechend den Laufzeiten in den Vorlaufstrecken das von beiden Grenzflächen reflektierte Schallsignal empfangen und mit Hilfe einer Auswerteeinrichtung ausgewertet.

Eine weitere Ausbildungsform der bekannten Messanordnung sieht eine zusätzliche Schallwandleranordnung innerhalb der die zu vermessende Flüssigkeit enthaltenen Messkammer derart vor, dass die an der Festflüssiggrenzfläche nicht reflektierten Schallwellenanteile nach Durchlaufen der die zu vermessenden Flüssigkeit enthaltenden Messkammer detektiert und in auswertbare Schallsignale umgewandelt werden. In Kenntnis der Längenverhältnisse des Schallweges sowie der Schalllaufzeit unter Einbeziehung der bestimmten akustischen Impedanz der zu vermessenden Flüssigkeit kann darüber hinaus die Dichte der Flüssigkeit in der mit dem weiteren Schallwandler verbundenen Auswerteeinrichtung berechnet werden.

Der DE 101 08 167 C1 ist ein Verfahren zur Bestimmung der Dichte von Flüssigkeiten insbesondere von Gewässern mittels eines Ultraschall-Dichtesensors zu entnehmen. Die bekannte Sensoreinheit weist einen piezokeramischen Schallwandler auf, der unmittelbar an einem Quarzzylinder befestigt ist, durch den ein vom Schallwandler erzeugter Ultraschallimpuls geleitet wird. Die Schallwelle durchläuft hierbei den Quarzzylinder und wird teilweise an der Grenzfläche zu einer zu vermessenden Flüssigkeit reflektiert und zu einem weiteren Teil in die angrenzende zu vermessende Flüssigkeit eingekoppelt, innerhalb der der sich ausbreitende Ultraschallimpuls von einem zweiten Sensor nach Durchlaufen einer bestimmten Messstrecke innerhalb der Flüssigkeit registriert wird. Aus den Messsignalen hinsichtlich des reflektierten Schallwellenanteils sowie des längs durch die Flüssigkeit transmittierten Ultraschallwellenanteils lässt sich die akustische Impedanz der zu untersuchenden Flüssigkeit im Verhältnis zur bekannten akustischen Impedanz des Quarzglases bestimmen.

Die Druckschrift US 5,533,402 offenbart ein Verfahren und eine Vorrichtung zur Untersuchung von Flüssigkeiten, insbesondere bezüglich der Eigenschaften Schallgeschwindigkeit und Dämpfung von Schallwellen. Die Vorrichtung umfasst zwei zylindrische, räumlich voneinander getrennt ausgebildete Resonatoren, wobei ein Resonator mit der zu untersuchenden Flüssigkeit und der andere mit einer Referenzflüssigkeit gefüllt sind. In den aus piezoelektrischem Material bestehenden oder mit piezoelektrischem Material beschichteten Resonatoren werden zylindrische, akustische, stehende Wellen im Ultraschallbereich angeregt. Hierbei werden mit einer ersten Elektrode akustische Wellen angeregt, die über die zweite Elektrode detektiert werden. Durch Rückkoppeln des detektierten Signals über eine Phasenregelschleife mit einer bestimmten Phasenbeziehung zum Anregungssignal können stehende, zylindrische Wellen im Resonator erzeugt und aufrechterhalten werden, ungeachtet von Temperaturänderungen oder anderen Umgebungseinflüssen, die eine Drift der Resonanzfrequenz nach sich ziehen. Die Schallgeschwindigkeit in der zu untersuchenden Flüssigkeit lässt sich über die Differenz der Resonanzfrequenzen von Referenzflüssigkeit und zu untersuchender Flüssigkeit ermitteln.

### Darstellung der Erfindung

Der Erfindung liegt die Aufgabe zugrunde eine Vorrichtung sowie ein Verfahren zur quantitativen Erfassung wenigsten einer physikalischen Eigenschaft eines flüssigen oder gasförmigen Probenmediums mit einer Messzelle, die zwei Messkammern vorsieht, von denen eine erste Messkammer mit dem Probenmedium und eine zweite Messkammer, die sog. Referenzkammer, mit einem Referenzmedium befüllbar sind und an die zur Einschallung von Schallwellen wenigstens ein erster Schallwandler und zur Detektion von Schallwellen wenigstens ein zweiter Schallwandler akustisch gekoppelt sind, sowie mit einer Ansteuer- und Auswerteeinheit, die mit dem wenigstens ersten und zweiten Schallwandler verbunden sind, derart weiterzubilden, dass eine Dichtebestimmung von Flüssigkeiten oder Gasen mit einer höheren Präzision möglich wird und auftretende Fehlereinflüsse, bspw. durch thermische oder mechanische Einflüsse vollständig ausgeschlossen werden können. Darüber hinaus soll die Vorrichtung möglichst kompakt und kleinbauend realisierbar sein, damit sie in bestehende Systeme, wie bspw. im Automobil- und Anlagenbau leicht integrierbar ist.

Die Lösung der der Erfindung zugrunde liegenden Aufgabe ist im Anspruch 1 angegeben. Gegenstand des Anspruches 10 ist ein Verfahren zur quantitativen Erfassung wenigstens einer physikalischen Eigenschaft eines flüssigen oder gasförmigen Probenmediums. Den Erfindungsgedanken vorteilhaft weiterbildende Merkmale sind Gegenstand der Unteransprüche sowie der weiteren Beschreibung insbesondere unter Bezugnahme auf das Ausführungsbeispiel zu entnehmen.

Die lösungsgemäße Vorrichtung betrifft eine speziell auf die jeweilige Messaufgabe zugeschnittene Messzelle mit einem Schallwandler, vorzugsweise einem Ultraschallwandler, die auf der Grundlage einer hochgenauen Nullabgleichsmethode arbeitet. Hierzu wird ein Referenzmedium, dessen physikalische Eigenschaften, bspw. akustische Impedanz, Schallgeschwindigkeit, Dichte, Viskosität, Gasgehalt, Schwebstoffgehalt, Salzkonzentration oder der Gehalt an einer anderen flüssigen Phase, bekannt sind, mit einem zu vermessenden Probenmedium verglichen. Idealerweise sollten sich die physikalischen Eigenschaften des Referenzmediums von denen des zu vermessenden Probenmediums möglichst wenig unterscheiden. Soll bspw. die Dichte von Wasser, mit unbekanntem Gehalt an Gasen, Schwebeteilchen, Salzen etc., bestimmt werden, so bietet sich als Referenzmedium entgastes, destilliertes Wasser gleicher Temperatur an. Im Falle einer zu vermessenden öligen Flüssigkeit wird demzufolge ein Öl mit exakt bekannter Dichte und Viskosität als Referenzmedium gewählt werden.

Die lösungsgemäße Vorrichtung zur quantitativen Erfassung und Bestimmung wenigsten einer physikalischen Eigenschaft eines flüssigen oder gasförmigen Probenmediums mit einer Messzelle, die gemäße den Merkmalen des Oberbegriffes des Anspruches 1 ausgebildet ist, zeichnen sich dadurch aus, dass die zwei Messkammern über eine gemeinsame Trennwand unmittelbar aneinander grenzen, wobei die Trennwand aus dem ersten Schallwandler besteht oder der erste Schallwandler Teil der Trennwand ist. Beide Messkammern besitzen jeweils eine der gemeinsamen Trennwand gegenüberliegende und parallel zur Trennwand orientierte Seitenwand, die jeweils aus dem zweiten Schallwandler zur Detektion von Schallwellen besteht oder in der jeweils der zweite Schallwandler zur Detektion integriert ist, wobei der Abstand zwischen einer dem ersten Schallwandler zuordenbaren Schallwandleroberfläche und einer dem zweiten Schallwandler zuordenbaren Schallwandleroberfläche, die der Schallwandleroberfläche des ersten Schallwandlers zugewandt ist, in beiden Messkammern identisch ist.

Beide Messkammern sind vorzugsweise in Form und Größe identisch und relativ zur gemeinsamen Trennwand spiegelsymmetrisch aufgebaut. Ferner sieht die lösungsgemäße Vorrichtung eine Ansteuer- und Auswerteeinheit vor, die einerseits mit dem ersten Schallwandler verbunden ist und diesen zum Aussenden eines Schallimpulses bzw. von Schallwellen ansteuert, und die andererseits die von den jeweils zweiten Schallwandlern durch Detektion von Schallwellen generierten Empfangssignale erhält und auf Basis dieser Empfangssignale eine Auswertung zur Bestimmung der wenigstens einen physikalischen Eigenschaft des zu vermessenden Probenmediums vornimmt.

Mit Hilfe der lösungsgemäßen Vorrichtung lässt sich die Einschallung von Schallwellen in beide Messkammern, d. h. sowohl in das Probenmedium als auch in das Referenzmedium, zeitgleich vornehmen. Dies wird dadurch ermöglicht, dass der jeweils erste Schallwandler in direktem beidseitigen Kontakt sowohl mit dem Probenmedium als auch mit dem Referenzmedium steht. Durch Aktivieren des vorzugsweise scheibenförmig ausgebildeten piezoelektrischen Ultraschallschwingers wird dieser in bidirektional orientierte, symmetrische Dickenschwingungen versetzt, so dass zeitgleich mit jeweils entgegen gesetzten Schallwellenausbreitungsrichtungen Schallwellen sowohl in das Referenzmedium als auch in das zu vermessende Probenmedium eingekoppelt werden. Die sich durch das Probenmedium sowie auch durch das Referenzmedium ausbreitenden Schallwellen werden jeweils nach Durchlaufen einer gleich langen Messstrecke mittels der an den Seitenwänden angebrachten zweiten Schallwandlern, vorzugsweise ebenfalls in Form scheibenförmiger piezoelektrischer Schwinger, detektiert und in Empfangssignale umgewandelt. Die von beiden Messkammern gewonnenen Empfangssignale werden nachfolgend einer Nullabgleichs-Messmethode zugeführt, die der quantitativen Erfassung der wenigstens einen physikalischen Eigenschaft zugrunde gelegt wird. Im Rahmen der Nullabgleichs-Messmethode werden die von beiden Messkammern stammenden Empfangssignale unmittelbar oder nach entsprechender Gleichrichtung voneinander subtrahiert.

Die lösungsgemäße Vorrichtung sowie mit der Vorrichtung durchführbare lösungsgemäße Verfahren sei im Weiteren unter Bezugnahme auf ein Ausführungsbeispiel näher erläutert.

### Wege zur Ausführung der Erfindung, gewerbliche Verwendbarkeit

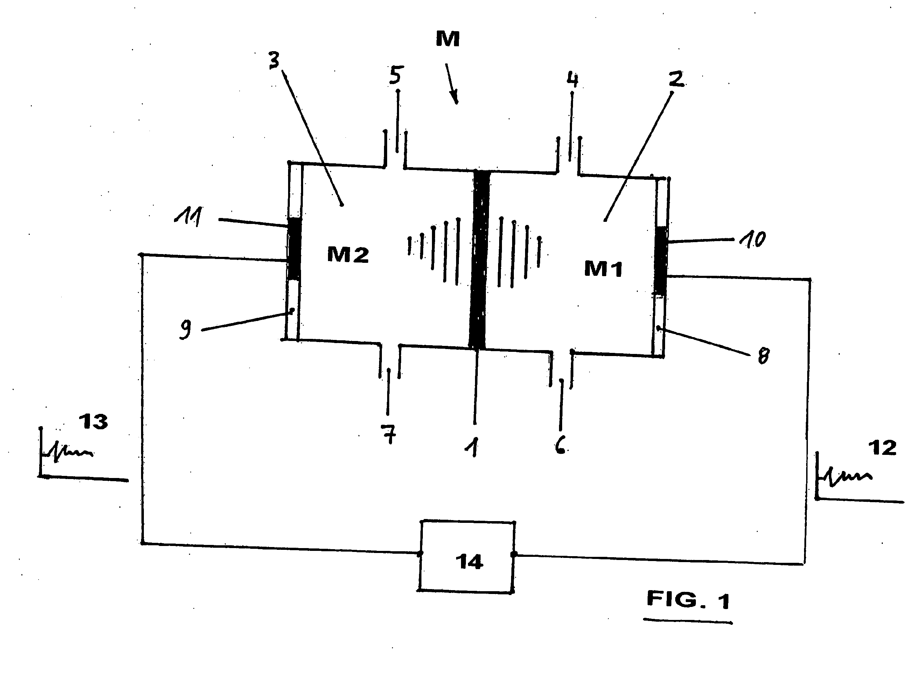

In Figur 1 ist eine Messzelle M schematisiert dargestellt, anhand der das Messprinzip näher erläutert werden soll. Die Messzelle M enthält einen scheibenförmigen piezoelektrischen Schallwandler 1, der die Messzelle M in zwei geometrisch identische Messkammern M1, M2 unterteilt und somit zugleich als Trennwand dient. Denkbar wäre auch eine solide Trennwand, in der ein Schallwandler integriert ist mit beidseitigem direktem Oberflächenzugang zu beiden Messkammern. Die eine Messkammer M1, die sog. Referenzkammer, enthält das sog. Referenzmedium 2, die zweite Messkammer M2 enthält das zu vermessende Probenmedium 3. Im Weiteren sei angenommen, dass das Referenz- sowie Probenmedium jeweils Flüssigkeiten darstellen, so dass im Weiteren von einer Referenzflüssigkeit 2 und einer zu vermessenden Flüssigkeit 3 die Rede ist.

Die Referenzflüssigkeit 3 sowie die zu vermessende Flüssigkeit 2 können über seitlich an den Messkammern M1, M2 angebrachte Einlässe 4 und 5 in die jeweiligen Messkammern M1, M2 eingefüllt werden. Über entsprechende Auslässe 6 und 7, die den Einlässen 4, 5, gegenüberliegend an den Messkammern M1, M2 angebracht sind, erfolgt eine entsprechende Ableitung beider Flüssigkeiten aus den jeweiligen Messkammern. Die Messung kann sowohl bei ruhender als auch im Durchflussbetrieb durchgeführt werden.

An der jeweils dem piezoelektrischen Schallwandler 1 gegenüberliegenden Seitenwand jeder Messkammer M1, M2 ist ein zweiter piezoelektrischer Schallwandler 10, 11 zur Detektion von Schallwellen integriert. Die dem ersten Schallwandler 1 zugewandte Oberfläche des jeweils zweiten Schallwandlers 10, 11 ist in beiden Messkammern M1, M2 jeweils gleich beabstandet zur der jeweiligen Messkammer M1, M2 zugewandten Oberfläche des ersten Schallwandlers 1 angeordnet. Diese Forderung bildet die Grundlage für eine erfolgreiche Anwendung der bereits erwähnten Nullabgleich-Messmethode.

So sei im Weiteren zunächst angenommen, dass die Referenzflüssigkeit 3 sowie die zu messende Flüssigkeit 2 identisch bezüglich ihrer Dichte und Schallgeschwindigkeit sind. Wird der erste Schallwandler 1 mit einem kurzen elektrischen Puls, bspw. mit einem kurzen Burstsignal, bspw. von einer nicht weiter dargestellten Steuereinrichtung getriggert, die gegebenenfalls mit der im weiteren beschriebenen Auswerteeinheit 14 kombinierbar ist, so werden in beiden Messkammern M1, M2 zwei exakt gleiche Schallwellenimpulse, vorzugsweise Ultraschallimpulse, eingestrahlt, deren Amplitude von der akustischen Impedanz der Flüssigkeit abhängt. Hierbei sei angemerkt, dass sich die Impedanz aus dem Produkt aus Schallgeschwindigkeit und Dichte der jeweiligen Flüssigkeit ergibt. Die beiden Schallimpulse laufen hierbei jeweils nach links bzw. rechts durch die jeweiligen Messkammern M1, M2 und treffen auf die parallel zur Schallwandleroberfläche des ersten Schallwandlers 1 orientierten Seitenflächen 8, 9 der Messkammern M1, M2. In jeder dieser Seitenflächen 8, 9 ist ein piezoelektrischer Empfänger 10, 11 integriert, die die beiden Teilwellen zu detektieren vermögen. Die durch die Detektion der Teilwellen von den piezoelektrischen Empfängern 10, 11 generierten Empfangssignale 12, 13 werden auf die Eingänge einer Auswerteelektronik 14, die bspw. als Differenzverstärker mit einer kombinierten Laufzeitmesseinrichtung ausgebildet ist, geleitet, die die beiden Signale direkt oder nach Gleichrichtung voneinander subtrahiert. Unter Voraussetzung exakt gleicher akustischer Impedanzen der innerhalb der Messkammern M1, M2 enthaltenen Flüssigkeiten ist das Ausgangssignal der Auswerteelektronik somit exakt Null.

Ist nun die zu vermessende Flüssigkeit von der Referenzflüssigkeit bezüglich Dichte und/oder Schallgeschwindigkeit verschieden, so resultiert eine unsymmetrische Schallabstrahlung des ersten Schallwandler 1. Die durch die Referenzflüssigkeit 2 sowie die zu vermessende Flüssigkeit 3 laufenden Teilwellen unterscheiden sich bezüglich Amplitude, Ausbreitungsgeschwindigkeit und eventuell auch in der Wellengestalt. Die Empfangssignale 12, 13 sind in diesem Fall nicht mehr identisch, so dass das Ausgangssignal der Auswerteelektronik 14 aufgrund der in dieser vorgesehenen Differenzelektronik ungleich Null ist.

So lässt sich bspw. zeigen, dass die Höhe des Differenzsignals in erster Näherung linear von dem Impedanzunterschied der in beiden Messkammern M1, M2 enthaltenden Flüssigkeiten abhängt. Zudem lassen sich die absoluten Laufzeiten der Schallwellen vom Aussendeort des ersten Schallwandlers 1 bis zu den piezoelektrischen Empfängern 10, 11 mit Hilfe der Auswerteelektronik 14 exakt bestimmen, so dass auch die Schallgeschwindigkeit innerhalb der zu messenden Flüssigkeit 3 bestimmt werden kann. Eine Dichtebestimmung der zu messenden Flüssigkeit 3 lässt sich mit Hilfe einer Auswerteformel aus der gemessenen Impedanz und Schallgeschwindigkeit oder anhand experimentell gewonnener Eichkurven exakt bestimmen.

Das vorstehend erläuterte Messprinzip auf der Grundlage der Nullabgleichs-Messmethode zur Dichtebestimmung ist grundsätzlich unabhängig von der Anregungs- bzw. Arbeitsfrequenz des Schallwandlers 1. Die Frequenz ist daher ein freier Parameter, mit dessen Wahl insbesondere bauliche Randbedingungen der Messzelle im Hinblick auf Form und Größe der einzelnen Messkammern verändert bzw. an die jeweilige Messaufgabe angepasst werden können.

Alternativ zu der vorstehend erläuterten Betriebsart des ersten Schallwandlers 1, der mit einem kurzzeitigen Burstsignal zur Aussendung eines Schallwellenpulses angeregt wird, kann der erste Schallwandler 1 auch monochromatisch oder quasi monochromatisch, üblicherweise in seiner Dickenschwingungsresonanz, angeregt werden.

Zunächst sei wieder vorausgesetzt, dass in beiden Messkammern M1, M2 jeweils die gleiche Flüssigkeit eingebracht ist. Das Verhältnis von Schallwellenlänge zum Abstand zwischen Schwingeroberfläche des ersten Schallwandlers 1 und den jeweiligen Seitenwänden 8, 9 wird derart gewählt, dass sich die hin- und herlaufenden Schallwellen konstruktiv überlagern und somit verstärken, d.h. dass der Abstand zwischen der Schallwandleroberfläche des ersten Schallwandlers und der Schallwandleroberfläche des jeweils zweiten Schallwandlers einem ganzzahligen Vielfachen der halben Wellenlänge der in die Flüssigkeit eingeschallten Schallwellen entspricht. Dies entspricht dem klassischen Resonanzbetrieb. In diesem Fall liefern die Empfänger 10, 11 wiederum exakt gleiche Empfangssignale 12, 13, die zueinander monochromatisch bzw. quasi monochromatisch ausgebildet sind. Bei der Subtraktion beider Empfangssignale 12, 13 innerhalb der Auswerteelektronik 14 ergibt sich wieder ein Ausgangssignal mit dem Wert exakt Null.
Wird nun in die Messkammer M2 eine Flüssigkeit 3 eingebracht, die sich bezüglich ihrer Dichte und/oder Schallgeschwindigkeit leicht von der der Referenzflüssigkeit 2 in der Messkammer M1 unterscheidet, so kommt es zu einer Verstimmung des Resonanzbetriebes innerhalb der Messkammer M2. Der Ausgang der Auswerteelektronik 14 liefert nach entsprechender Differenzbildung ein Signal, dessen Signalhöhe von der Verstimmung der Resonatoren abhängt. Diese Betriebsart kann alternativ oder zusätzlich zu dem oben beschriebenen Grundprinzip hinsichtlich der Einschallung lediglich eines Schallwellenimpulses, eingesetzt werden.

Auch ist es möglich die Messzelle und damit verbunden den ersten Schallwandler 1 mit unterschiedlichen Frequenzen zu betreiben, d. h. in einem sog. Mehrfrequenzbetrieb. Dies kann entweder dadurch geschehen, dass der Schallwandler 1 jeweils in höheren Resonanzmoden angeregt oder aber die Messzelle derart konstruktiv verändert wird, dass sie mehrere getrennte Messstrecken beinhaltet, deren Laufwege zudem unterschiedlich lang dimensioniert sind.

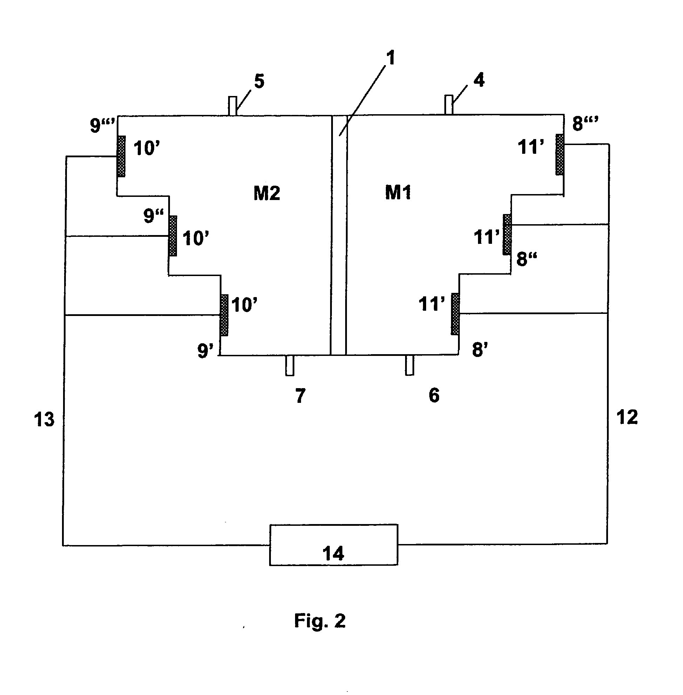

Eine derartige Anordnung ist aus Fig. 2 schematisiert zu entnehmen. In diesem Fall sind die Seitenwände 8, 9 der Messkammern M1, M2 gestuft und spiegelsymmetrisch zur Trennwand 1 bzw. zum ersten Schallwandler 1 ausgebildet. Jede einzelne Seitenwandabstufung 8', 8", 8"' bzw. 9', 9", 9"' weist jeweils einen zweiten Schallwandler 10', 11' auf. Auf diese Weise wird die Vermessung jeweils unterschiedlich lang ausgebildeter einzelner Messstrecken mit Hilfe einer einzigen Messzelle M ermöglicht, wie dies aus Figur 2 zu entnehmen ist. Mit einer derartigen Anordnung können frequenzabhängig Schallschwächungsmessungen durchgeführt werden, aus denen weitere Eigenschaften der Flüssigkeit abgeleitet werden können, wie bspw. Gasgehalt, Viskosität, Gehalt- und Größenverteilung etwaiger Schwebeteilchen. Bereits in Verbindung mit Figur 1 erläuterte Komponenten weisen auch in dem Ausführungsbeispiel in Figur 2 entsprechend gleiche Bezugszeichen auf.

Die lösungsgemäße Vorrichtung lässt sich nicht nur, wie vorstehend beschrieben auf die Vermessung von Flüssigkeiten anwenden, sondern ermöglicht zudem auch die Bestimmung physikalischer Eigenschaften von Gasen.

### Bezugszeichenliste

- 1: Trennwand, erster Schallwandler
- 2: Referenzmedium, Referenzflüssigkeit
- 3: Probenmedium, zu vermessende Flüssigkeit
- 4, 5: Einlässe bzw. Zuleitung
- 6, 7: Auslässe, Ableitungen
- 8, 9: Seitenwand
- 8',8",8"': Gestufte Seitenwandabschnitte
- 9',9",9"':
- 10, 11: Zweite Schallwandler, piezoelektrische Empfänger
- 10', 11': Zweite Schallwandler
- 12, 13: Empfangssignale
- 14: Auswerteelektronik
- M1, M2: Messkammer

## Patentansprüche

1. Vorrichtung zur quantitativen Erfassung wenigstens einer physikalischen Eigenschaft eines flüssigen oder gasförmigen Probenmediums mit einer Messzelle, die zwei Messkammern vorsieht, von denen eine erste Messkammer mit dem Probenmedium und eine zweite Messkammer, die so genannte Referenzkammer, mit einem Referenzmedium befüllbar sind und an die zur Einschallung von Schallwellen wenigstens ein erster Schallwandler und zur Detektion von Schallwellen wenigstens ein zweiter Schallwandler akustisch gekoppelt sind, sowie mit einer Ansteuer- und Auswerteinheit, die mit dem wenigstens ersten und zweiten Schallwandler verbunden sind,
**dadurch gekennzeichnet, dass** die zwei Messkammern über eine gemeinsame Trennwand unmittelbar aneinandergrenzen,
dass die Trennwand aus dem ersten Schallwandler besteht oder der erste Schallwandler Teil der Trennwand ist,
dass beide Messkammern jeweils eine der gemeinsamen Trennwand gegenüberliegende und parallel zur Trennwand orientierte Seitenwand besitzen, die jeweils aus dem zweiten Schallwandler zur Detektion von Schallwellen besteht oder in der jeweils der zweite Schallwandler zur Detektion integriert ist, wobei der Abstand zwischen einer dem ersten Schallwandler zuordenbaren Schallwandleroberfläche und einer dem zweiten Schallwandler zuordenbaren Schallwandleroberfläche, die der Schallwandleroberfläche des ersten Schallwandlers zugewandt ist, in beiden Messkammern identisch ist, und
dass die jeweils zweiten Schallwandler Empfangssignale generieren, die zur Ansteuer- und Auswerteinheit übertragbar sind und der Erfassung der wenigstens einen physikalischen Eigenschaft zugrunde liegen.

2. Vorrichtung nach Anspruch 1,
**dadurch gekennzeichnet, dass** die Ansteuer- und Auswerteinheit einen Differenzverstärker aufweist, der die Empfangssignale beider zweiten Schallwandler voneinander subtrahiert.

3. Vorrichtung nach Anspruch 1 oder 2,
**dadurch gekennzeichnet, dass** die Ansteuer- und Auswerteinheit eine Laufzeitmesseinrichtung vorsieht, zur Erfassung der Laufzeiten der jeweils in das Probenmedium sowie das Referenzmedium eingekoppelten Schallwellen, gemessen vom Ort des ersten Schallwandlers bis zum Eintreffen der Schallwellen am Ort des zweiten Schallwandlers.

4. Vorrichtung nach einem der Ansprüche 1 bis 3,
**dadurch gekennzeichnet, dass** die zwei Messkammern in Form und Größe identisch ausgebildet sind.

5. Vorrichtung nach einem der Ansprüche 1 bis 4,
**dadurch gekennzeichnet, dass** der erste Schallwandler ein scheibenförmiger, piezoelektrischer Schwinger ist.

6. Vorrichtung nach einem der Ansprüche 1 bis 5,
**dadurch gekennzeichnet, dass** die jeweils zweiten Schallwandler als piezoelektrische Empfänger ausgebildet sind.

7. Vorrichtung nach einem der Ansprüche 1 bis 6,
**dadurch gekennzeichnet, dass** die beiden Messkammern jeweils eine Zu- und Abflussleitung besitzen, und
dass die Zu- und Abflussleitung jeweils derart an der Messkammer angebracht sind, so dass das Probenmedium sowie das Referenzmedium jeweils eine Zu- und Abflussrichtung in oder durch die jeweilige Messkammer aufweist, die parallel zur Trennwand orientiert ist.

8. Vorrichtung nach einem der Ansprüche 1 bis 7,
**dadurch gekennzeichnet, dass** der Abstand zwischen der Schallwandleroberfläche des ersten Schallwandlers und der Schallwandleroberfläche des jeweils zweiten Schallwandlers einem ganzzahligen Vielfachen der halben Wellenlänge der in das Probenmedium und Referenzmedium eingeschallten Schallwellen entspricht.

9. Vorrichtung nach einem der Ansprüche 1 bis 8,
**dadurch gekennzeichnet, dass** die der gemeinsamen Trennwand jeweils gegenüberliegende und parallel zur Trennwand orientierte Seitenwand pro Messkammer wenigstens einfach gestuft ausgebildet ist und wenigstens zwei Seitenwandabschnitte aufweist, von denen jeder Seitenwandabschnitt einen unterschiedlichen Abstand zur Trennwand aufweist, und
dass jedem Seitenwandabschnitt jeweils ein zweiter Schallwandler zugeordnet ist.

10. Verfahren zur quantitativen Erfassung wenigstens einer physikalischen Eigenschaft eines flüssigen oder gasförmigen Probenmediums mit einer Messzelle, die zwei Messkammern vorsieht, von denen eine erste Messkammer mit dem Probenmedium und eine zweite Messkammer, die so genannte Referenzkammer, mit einem Referenzmedium befüllt wird, wobei in beide Messkammern mithilfe eines gemeinsamen Schallwandlers Schallwellen eingekoppelt werden, die nach Durchlaufen einer Messstrecke jeweils innerhalb der beiden Messkammern in Empfangssignale umgewandelt werden, die einer Auswertung zugrunde gelegt werden,
**dadurch gekennzeichnet, dass** die Einschallung der Schallwellen in beide Messkammern, d.h. sowohl in das Probenmedium als auch in das Referenzmedium, zeitgleich vorgenommen wird,
dass die sich durch das Probenmedium sowie auch durch das Referenzmedium ausbreitenden Schallwellen jeweils nach Durchlaufen einer gleichlangen dimensionierten Messstrecke detektiert und jeweils in Empfangssignale umgewandelt werden, und
dass die von beiden Messkammern gewonnenen Empfangssignale einer Nullabgleichs-Messmethode zugeführt werden, die der quantitativen Erfassung der wenigstens einen physikalischen Eigenschaft zugrunde gelegt wird.

11. Verfahren nach Anspruch 10,
**dadurch gekennzeichnet, dass** das Referenzmedium über bekannte physikalische Eigenschaften verfügt und derart ausgewählt wird, dass die physikalischen Eigenschaften des Referenzmediums zumindest vergleichbar mit den physikalischen Eigenschaften des Probenmediums sind.

12. Verfahren nach Anspruch 10 oder 11,
**dadurch gekennzeichnet, dass** die physikalischen Eigenschaften wenigstens eine aus den nachstehenden Eigenschaften betrifft: akustische Impedanz, Schallgeschwindigkeit, Dichte, Viskosität, Gasgehalt, Schwebstoffgehalt, Partikel- oder Stoffkonzentration.

13. Verfahren nach einem der Ansprüche 10 bis 12,
**dadurch gekennzeichnet, dass** zur Nullabgleichs-Messmethode die Empfangssignale aus beiden Messkammern unmittelbar oder nach Gleichrichtung subtrahiert werden.

14. Verfahren nach einem der Ansprüche 10 bis 13,
**dadurch gekennzeichnet, dass** die Einschallung der Schallwellen in das Proben- und Referenzmedium mittels
a) eines Burstsignals,
b) im Wege einer monochromatischen Schallwellenanregung unter Ausbildung von sich jeweils konstruktiv innerhalb der Messkammer durch Reflexion überlagernden Schallwellen, oder
c) Mehrfrequenzanregung erfolgt.
